(19) Europäisches Patentamt / European Patent Office / Office européen des brevets

(11) **EP 2 238 724 B1**

(12) **EUROPEAN PATENT SPECIFICATION**

(45) Date of publication and mention of the grant of the patent:
**29.03.2017 Bulletin 2017/13**

(21) Application number: **08705381.5**

(22) Date of filing: **30.01.2008**

(51) Int Cl.:
*H04L 27/20* (2006.01)    *H04L 1/00* (2006.01)
*H04B 7/26* (2006.01)    *H04L 27/18* (2006.01)
*H04J 11/00* (2006.01)    *H04W 52/00* (2009.01)

(86) International application number:
**PCT/SE2008/050116**

(87) International publication number:
**WO 2009/096832 (06.08.2009 Gazette 2009/32)**

(54) **TIMESLOT SHARING USING UNBALANCED QPSK MODULATION**

ZEITSCHLITZ-SHARING UNTER VERWENDUNG VON UNSYMMETRISCHER QPSK-MODULATION

PARTAGE DE CRÉNEAUX TEMPORELS PAR UTILISATION DE MODULATION QPSK NON ÉQUILIBRÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**13.10.2010 Bulletin 2010/41**

(73) Proprietor: **Telefonaktiebolaget LM Ericsson (publ)**
**164 83 Stockholm (SE)**

(72) Inventor: **LOPEZ, Miguel**
**S-171 59 Solna (SE)**

(74) Representative: **Ericsson**
**Patent Development**
**Torshamnsgatan 21-23**
**164 80 Stockholm (SE)**

(56) References cited:
**EP-A2- 1 037 437**    **EP-A2- 1 037 437**
**US-A- 4 736 170**    **US-A1- 2008 159 246**

- **NOKIA: "Voice Capacity Evolution with Orthogonal Sub", 3GPP DRAFT; GP-070214 - OSC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Seoul; 20070206, 6 February 2007 (2007-02-06), XP050017665, [retrieved on 2007-02-06]**
- **HILL D A ET AL: "CARRIER DETECTION OF UNBALANCED QPSK DIRECT SEQUENCE SIGNALS", MILCOM 1999. IEEE MILITARY COMMUNICATIONS CONFERENCE PROCEEDINGS. ATLANTIC CITY, NJ, OCT. 31 - NOV. 3, 1999; [IEEE MILITARY COMMUNICATIONS CONFERENCE], NEW YORK, NY : IEEE, US, vol. 7, 31 October 1999 (1999-10-31), pages 437-441, XP000921963, DOI: 10.1109/MILCOM.1999.822721 ISBN: 978-0-7803-5539-2**
- **NOKIA: 'Voice Capacity Evolution with Orthogonal Sub Channel' 3GPP TSG GERAN #33, GP-070214 12 February 2007 - 16 February 2007, SEOUL, SOUTH KOREA, XP050017665**
- **'Military Communications Conference Proceedings, 1999. MILCOM 1999. IEEE', vol. 1, 1999 article KHAIRY, M.M. ET AL.: 'Asymmetric modulation and multistage coding for multicasting with multi-level reception over fading channels', pages 92 - 96, XP010369654**

**Description**

TECHNICAL FIELD

The present invention relates to a method and a device for modulating data. In particular the present invention relates to modulation of data transmitted to two mobile stations is a cellular radio system simultaneously on shared channel.

BACKGROUND

The concept of Orthogonal Sub Channels (OSC) proposed in "Voice capacity evolution with orthogonal sub channel, see" 3GPP TSG GERAN Meeting #33, GP-070214 has been well accepted. One reason is that the dramatic growth of the subscriber base in developing countries imposes a tremendous pressure on the Base Transceiver Station (BTS) hardware resources. Therefore, a study item for a technique dubbed MUROS (Multiple User Reusing One Slot) has been opened in the standardization of GSM. see "New Study Item on Multi-User Reusing One Slot (MUROS" 3GPP TSG GERAN Meeting #36. GP072027.
OSC is a multiplexing technique that allows two users to share the same frequency and time slot. It relies on Quadrature Phase Shift Keying (QPSK) modulation in the downlink channel. The I and Q branches of a modulated signal form two sub channels. The data carried by the I branch belongs to a first user, while the data carried by the Q branch belongs to a second user. Orthogonality is preserved by using a root raised cosine pulse shaping filter with a bandwidth equal to the reciprocal of the symbol period. At the receiver side, the mobile stations (MS) rely on orthogonal training sequences in order to separate the sub channels, see 3GPP TSG GERAN Meeting #33, GP-070214. In the uplink channel, the two mobile stations sharing the same channel also transmit in the same frequency and time slot.
The base station separates the two users using a multi-user detector, e.g. successive interference cancellation.
It has been stated in "New Study Item on Multi-User Reusing One Slot (MUROS" 3GPP TSG GERAN Meeting #36, GP072027, that the physical layer for MUROS must support legacy mobile stations in one of the sub channels. However, it has been reported, see e.g. "The Performance of OSC and Feasibility Analysis", 3GPP TSG GERAN Meeting #36, GP071663 and "Discussion Paper on OSC", 3GPP TSG GERAN Meeting #36, GP071785, that OSC may not be backward compatible with legacy Gaussian minimum shift keying (GMSK) mobile stations. The problem arises in the downlink channel, because a legacy receiver exhibits very poor performance when the transmitted signal is Quadrature phase-shift keying (QPSK) modulated.
Moreover, some concerns have been raised about the constraints that OSC imposes on power control and the need to subdivide the cells of a cellular radio system, leading to additional handovers and hence presenting a potential to degrade some of the Key Performance Indicators (KPI) such as dropped calls, see also "On Orthogonal Sub channels", 3GPP TSG GERAN Meeting #36, GP071720. Also so far, none of the proposals for MUROS as set out in Voice capacity evolution with orthogonal sub channel," 3GPP TSG GERAN Meeting #33, GP-070214 and "Speech capacity enhancements using DARP", 3GPP TSG GERAN Meeting #36, GP071739 fulfills the backward compatibility requirement for legacy mobiles.
NOKIA: "Voice Capacity Evolution with Orthogonal Sub", 3GPP DRAFT;GP-070214 - OSC, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE, vol. TSG GERAN, no. Seoul; 20070206, 6 February 2007, discloses a method of modulating data transmitted in a Global System for Mobile communication, GSM system using a quadrature phase shift keying, QPSK, modulation scheme in a cellular radio system comprising a Base Transceiver Station transmitting data to two mobile stations multiplexed on a shared channel in two branches, forming a QPSK constellation sequence and rotating the sequence by n/2.
EP1037437A2 discloses a modulation method and system for unbalanced quadrature phase shift keying involves determining user's communication needs based on conditions such as weather, signal to noise ratio, and cell location.
Signals destined for a user are modulated according to the determined needs of the user. A signal destined for a user operating in a relatively friendly communication environment is modulated with less effective energy than a signal destined for a user operating in a relatively hostile communication environment.
Hence, there exist a need for a method and a system that eliminates or at least reduces the negative aspects of introducing OSC in existing cellular radio systems.

SUMMARY

It is an object of the present invention to overcome or at least reduce some of the problems associated with the introduction reuse of slots, such as by using OSC, in cellular radio systems.

It is another object of the present invention to provide a method and a device that is capable of improving the transmission of data in a cellular radio system employing OSC.

These objects and others are obtained by the method and modulator as set out in the appended claims. Thus. by modulating data transmitted using a QPSK modulation scheme in a cellular radio system to two mobile stations multiplexed on a shared channel comprising two branches, such that the total energy of the QPSK modulated is divided unequally between the two branches of the modulated signal an improved radio system can be obtained.

Hence, in the downlink channel a parameterized, hybrid quaternary modulation is employed. In the hybrid quadrature modulation, the symbol constellation is in quadrature, with the 4 symbols lying on the unit circle in the complex plane. The orthogonality of the I and Q branches is preserved. However, a cross power branch ratio parameter $\alpha$ is introduced, allowing the total energy of the signal to be divided unequally between the two sub channels. This parameter $\alpha$ may be changed from over time. The parameter may for example be changed from one transmission time slot to the next transmission time slot. It is chosen so that $0 \leq \alpha \leq 1$. In the extreme case when $\alpha = 1$ the power is divided equally between the I/Q branches, resulting in ordinary QPSK modulation. When $\alpha = 0$ all the signal power is given to one of the branches yielding BPSK modulation. Other values of $\alpha$ causes intermediate distributions of the total energy between the I and Q sub channels. In accordance with one embodiment, the parameter $\alpha$ can be chosen adaptively, for example based upon feedback from one or both mobile stations receiving data via the shared downlink channel, or using a fixed scheme.

The invention also extends to a cellular radio system, a modulator and a mobile station adapted to make use of the method in accordance with the above.

## BRIEF DESCRIPTION OF THE DRAWINGS

The present invention will now be described in more detail by way of non-limiting examples and with reference to the accompanying drawings, in which:

- Fig. 1 is a flow chart illustrating different steps performed when modulating data,
- Fig. 2 is a view of a signal constellation,
- Fig. 3 is a view illustrating the cross power ratio between the I and Q branches,
- Fig. 4 is a view of a modulator.
- Fig. 5 is a view of a cellular radio system employing OSC,
- Figs 6a and 6b illustrate different procedural steps performed in a receiver receiving data modulated using OSC.

## DETAILED DESCRIPTION

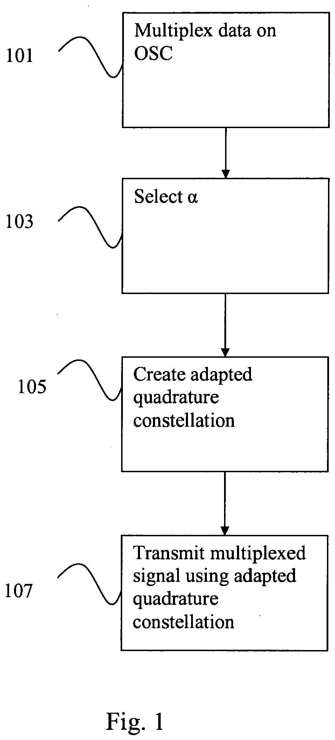

In Fig. 1 a flowchart illustrating different steps performed when modeling data in accordance with one embodiment of the present invention is shown. First in a step 101 data is to be transmitted to different users of a cellular radio system are multiplexed on Orthogonal Sub Channels (OSC). In accordance with one embodiment of the present invention, an ordinary QPSK constellation consisting of the following points may be chosen.

$$\left| \sqrt{\frac{1}{2}} + j\sqrt{\frac{1}{2}} \right| \sqrt{\frac{1}{2}} - j\sqrt{\frac{1}{2}} \left| -\sqrt{\frac{1}{2}} + j\sqrt{\frac{1}{2}} \right| -\sqrt{\frac{1}{2}} - j\sqrt{\frac{1}{2}}$$

Using the ordinary QPSK constellation as a starting point, a cross power ratio parameter $0 \leq \alpha \leq 1$ is then chosen based on for example, a predefined criterion or on feedback from one or many mobile stations in a step 103. A new quadrature constellation is then created as follows in a step 105:

$$\left| \alpha\sqrt{\frac{1}{2}} + j\sqrt{2-\alpha^2}\sqrt{\frac{1}{2}} \right| \alpha\sqrt{\frac{1}{2}} - j\sqrt{2-\alpha^2}\sqrt{\frac{1}{2}} \left| -\alpha\sqrt{\frac{1}{2}} + j\sqrt{2-\alpha^2}\sqrt{\frac{1}{2}} \right| -\alpha\sqrt{\frac{1}{2}} - j\sqrt{2-\alpha^2}\sqrt{\frac{1}{2}}$$

In the following a quadrature constellation such as the one above will be referred to as adaptive $\alpha$ -QPSK constellation. Next in a step 107 data are transmitted multiplexed to the users using the modulation determined in step 105.

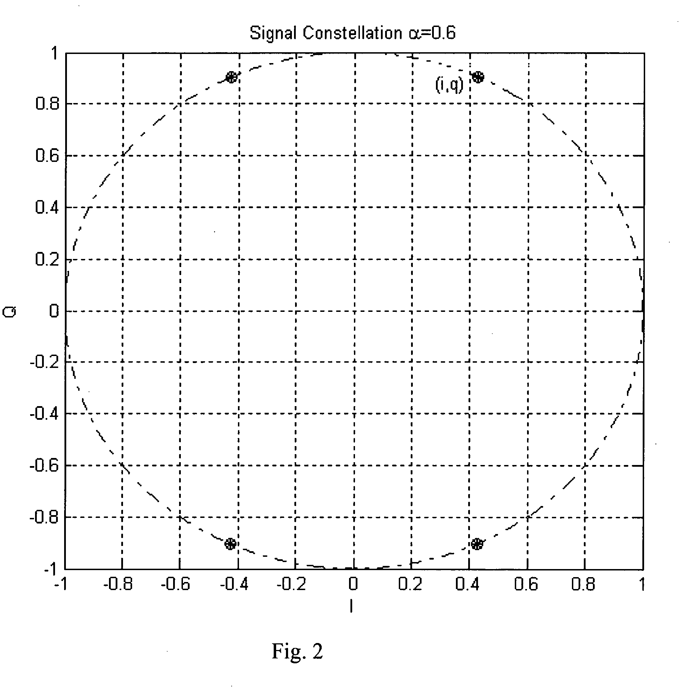

In Fig. 2, the four points in an adaptive $\alpha$ -QPSK constellation are shown with $\alpha$ =0.6.

In an adaptive $\alpha$-QPSK constellation, the cross power ratio between the I and Q branches is

$$\chi = \frac{\alpha^2}{2 - \alpha^2} \qquad (1)$$

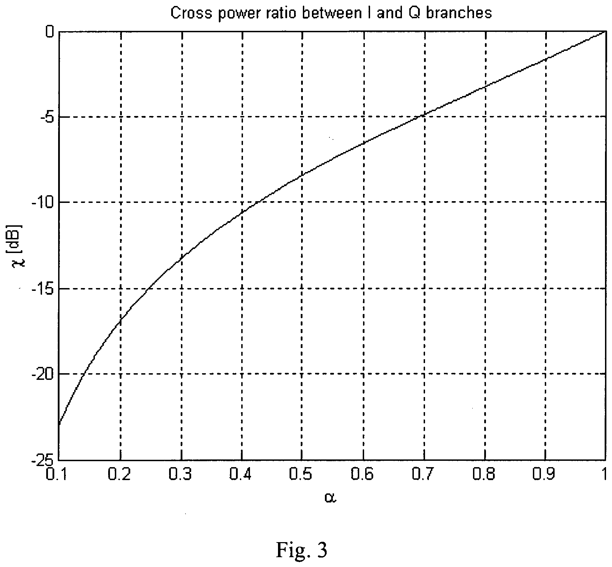

In Fig. 3 the cross power ratio $\chi$ between the I and Q branches is shown as a function of $\alpha$. For example, if $\alpha$ = 0.6 then the power of the I branch is approximately 6.6 dB lower than the power of the Q branch. It is preferred to keep the total energy in the symbol constellation constant, independently of the value of $\alpha$.

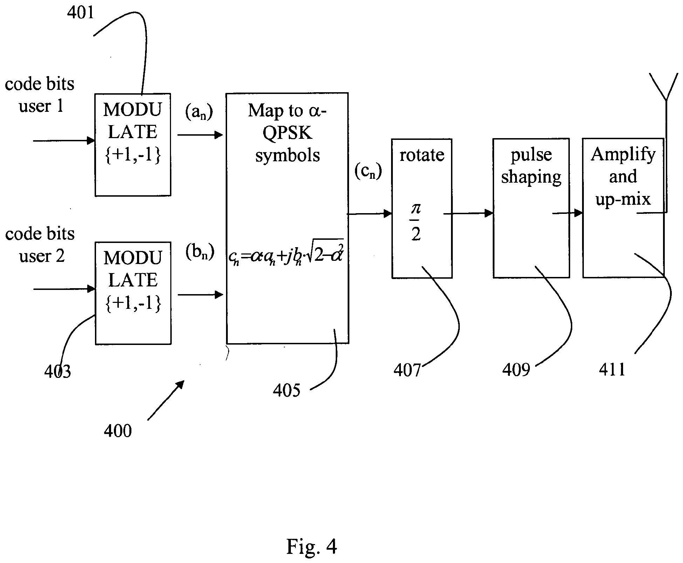

In Fig. 4 an exemplary modulator 400 used in transmission of data using an $\alpha$-QPSK modulation is depicted. The modulator 400 comprises initial modulators 401 and 403 for receiving and QPSK modulating data sequences to be transmitted to two different mobile stations. The modulators 401 and 403 are coupled to a mapping unit 405 adapted to map the QPSK signals from the modulators 401 and 403 in accordance with an adaptive $\alpha$-QPSK constellation such as the one described hereinabove. The adaptive $\alpha$-QPSK constellation sequence formed in the unit 405 is forwarded to a rotation block 407 connected to a pulse shaping filter 409 which in turn is connected to a unit 411 adapted to amplify and mix-up the multiplexed data sequence to be transmitted to the intended receivers to the carrier frequency.

The modulator 400 may receive feedback from one or both mobile stations to which data is transmitted. In response to received feedback the modulator can be adapted to adjust $\alpha$ accordingly. For example $\alpha$ may be set to depend upon the distances from the two mobile stations to the Base Transceiver Station (BTS), the reported received signal quality (RXQUAL), or upon the capabilities of the mobile stations (e.g. legacy/OSC aware).

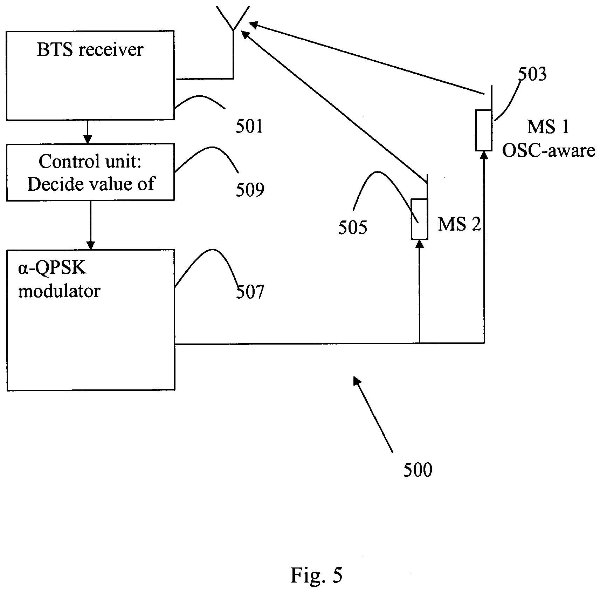

In Fig. 5 an exemplary process of a cellular radio system 500 is illustrated. The system 500 comprises a BTS receiver 501 for receiving data transmitted from a number of mobile stations 503 and 505 connected to the cellular radio system via the Base Transceiver Station 501. The mobile stations 503 and 505 may be OSC aware or non-OSC aware. In the example depicted in Fig. 5. the mobile station 503 is OSC aware whereas the mobile station 505 is non-OSC aware. The system 500 further comprises a modulator 507, such as the modulator in accordance described above in conjunction with Fig. 4 for generating an adaptive $\alpha$-QPSK modulated signal. In addition the system comprises a control unit 509 for calculating a suitable value $\alpha$ and for feed the $\alpha$-value to the $\alpha$-QPSK modulator. The value of $\alpha$ may change from one transmission interval to a subsequent transmission interval. It is also possible to use a constant, predefined value of $\alpha$.

An OSC-aware receiver, such as Mobile station 503 in, Fig. 5 will exhibit better performance if the value of $\alpha$ (alternatively $\chi$) is used during synchronization/channel estimation and demodulation. If it is not known, then it can be estimated.

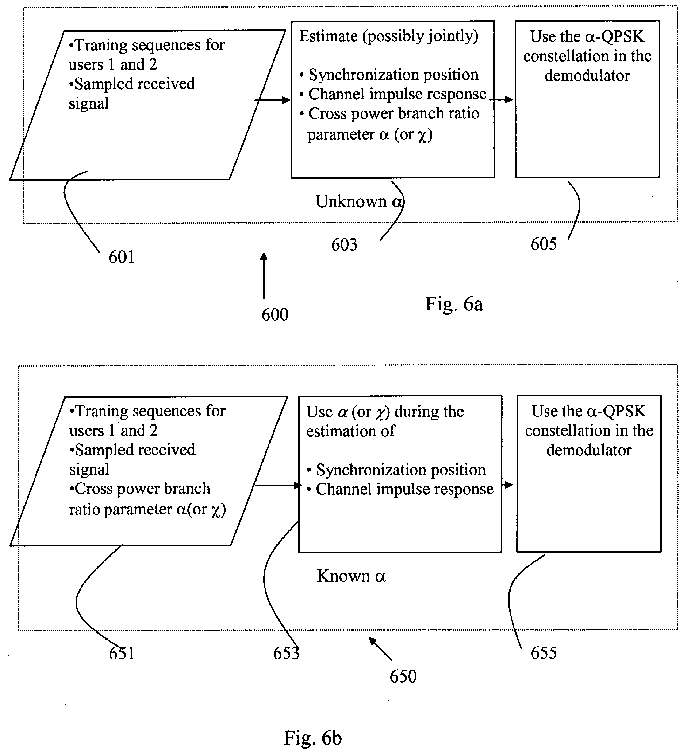

In Figs. 6a and 6b different steps performed in a receiver receiving data modulated in accordance with the above are shown. In Fig. 6a steps performed in a receiver 600 during synchronization/channel estimation and demodulation if $\alpha$ is not known, First in a block 601, the training sequences for users multiplexed on the OSC sub-channels are obtained together with the sampled received signal. Next, in a block 603. the synchronization position, channel impulse response and cross power branch ration parameter $\alpha$ or $\chi$, or any other parameter correlated to $\alpha$, are estimated thereby providing an estimate on the $\alpha$-QPSK constellation used by the modulator in the transmitter. The estimation in block 603 may be performed jointly. The estimated $\alpha$-QPSK constellation of block 603 is then used in a block 605 when demodulating the received signal.

In Fig. 6b steps performed in a receiver 650 during synchronization/channel estimation and demodulation if $\alpha$ is known. First in a block 651, the training sequences for users multiplexed on the OSC sub-channels are obtained together with the sampled received signal and the cross power branch ration parameter $\alpha$ or $\chi$ or any other parameter correlated to $\alpha$ are obtained. Next, in a block 653, the cross power branch ration parameter, such as $\alpha$ or $\chi$ are used during estimation of the synchronization position and channel impulse response. The $\alpha$-QPSK constellation is then used in a block 655 when demodulating the received signal.

Using adaptive $\alpha$-QPSK modulation as described herein will improve the performance of a legacy receiver, while moderately punishing an OSC-aware receiver. The performance results for 8PSK-quarter rate together simulations indicate that OSC enhanced with adaptive $\alpha$-QPSK modulation is a competitive alternative for a quarter rate speech bearer, even when a legacy mobile occupies one of the sub channels.

Furthermore, using the modulation scheme and modulator as described herein enhances the OSC concept, making it possible to introduce legacy mobiles in one of the sub channels, which is a key requirement for any multiplexing concept complying with MUROS. in addition it allows more flexible power control in OSC. This will help obtain better system performance and will help maintain or improve the KPI's. This is another issue of great importance. The modulation technique is also straightforward to implement in any BTS hardware capable of transmitting 8PSK.

**Claims**

1. A method of modulating data transmitted in a Global System for Mobile communication, GSM system using a quadrature phase shift keying, QPSK, modulation scheme in a cellular radio system (500) comprising a Base Transceiver Station, BTS, (501) transmitting data to two mobile stations (503, 505) multiplexed on a shared channel comprising two sub channels, wherein one of the two sub channels is an I sub channel and the other is a Q sub channel **characterized in that** the total energy of the QPSK modulated signal is divided unequally between the two sub channels of the modulated signal forming an $\alpha$-QPSK constellation sequence, and rotating the sequence by $\pi/2$, wherein $\alpha$ is set based on that at least one of the two mobile stations (503, 505) is a legacy mobile station and wherein the legacy mobile station is occupying one of the sub channels.

2. The method according to claim 1 , **characterized in that** the total energy of the QPSK modulated signal is divided adaptively between the two sub channels.

3. The method according to claim 2, **characterized i**n that the energy distribution between the two sub channels of the QPSK modulated signal is changed from one transmission slot to the next transmission slot.

4. The method according to any of claims 1 - 3 **characterized in that** the two mobile stations are Global system for Mobile communication, GSM, mobile stations sharing the same channel using Orthogonal Sub Channels.

5. The method according to any of claims 1 - 4 , **characterized in that** the QPSK modulated signals are all located on the unit circle in the complex plane.

6. The method according to any of claims 1 - 5, **characterized in that** the $\alpha$-QPSK constellation is of the form:

$$\boxed{\left| \; \alpha\sqrt{\frac{1}{2}} + j\sqrt{2-\alpha^2}\sqrt{\frac{1}{2}} \; \right| \; \alpha\sqrt{\frac{1}{2}} - j\sqrt{2-\alpha^2}\sqrt{\frac{1}{2}} \; \left| \; -\alpha\sqrt{\frac{1}{2}} + j\sqrt{2-\alpha^2}\sqrt{\frac{1}{2}} \; \right| \; -\alpha\sqrt{\frac{1}{2}} - j\sqrt{2-\alpha^2}\sqrt{\frac{1}{2}} \;}$$

7. A modulator for modulating data transmitted as a modulated signal in a Global System for Mobile communication, GSM system to two mobile stations multiplexed on a shared channel in two sub channels using a quadrature phase shift keying, QPSK, modulation scheme, wherein one of the two sub channels is an I sub channel and the other is a Q sub channel, **characterized by**:

   - means (405) for dividing the total energy of the QPSK modulated signal unequally between the two sub channels of the modulated signal forming an $\alpha$-QPSK constellation sequence, and
   - means (407) for rotating the sequence by $\pi/2$, and

   wherein $\alpha$ is set based on that a mobile station (505) is a legacy mobile station and wherein the legacy mobile station is occupying one of the sub channels.

8. The modulator according to claim 7, **characterized by** means for adaptively dividing the total energy of the QPSK modulated between the two sub channels.

9. The modulator according to claim 8 **characterized b**y means for changing energy distribution between the two sub channels from one transmission slot to the next transmission slot.

10. The modulator according to any of claims 7-9 , **characterized by** means for locating the all QPSK modulated signals on the unit circle in the complex plane.

11. The modulator according to any of claims 7-10, **characterized in that** the $\alpha$-QPSK constellation is of the form:

$$\boxed{\left| \; \alpha\sqrt{\frac{1}{2}} + j\sqrt{2-\alpha^2}\sqrt{\frac{1}{2}} \; \right| \; \alpha\sqrt{\frac{1}{2}} - j\sqrt{2-\alpha^2}\sqrt{\frac{1}{2}} \; \left| \; -\alpha\sqrt{\frac{1}{2}} + j\sqrt{2-\alpha^2}\sqrt{\frac{1}{2}} \; \right| \; -\alpha\sqrt{\frac{1}{2}} - j\sqrt{2-\alpha^2}\sqrt{\frac{1}{2}} \;}$$

**Patentansprüche**

1. Verfahren zum Modulieren von Daten, die in einem globales System für mobile Kommunikation, GSM-System, unter Verwendung eines Quadraturphasenumtastung-Modulationsschemas, QPSK-Modulationsschemas, in einem zellularen Funksystem (500) übertragen werden, eine Basis-Transceiver-Station, BTS, (501) umfassend, die Daten an zwei Mobilstationen (503, 505) überträgt, die auf einem gemeinsam genutzten Kanal gemultiplext sind, der zwei Subkanäle umfasst, worin einer der zwei Subkanäle ein I-Subkanal ist und der andere ein Q-Subkanal ist, **dadurch gekennzeichnet, dass** die gesamte Energie des QPSK-modulierten Signals zwischen den zwei Subkanälen des modulierten Signals ungleich verteilt ist, wobei eine $\alpha$-QPSK-Konstellationssequenz geformt wird und die Sequenz um $\pi/2$ rotiert wird, worin $\alpha$ darauf basierend eingestellt wird, dass mindestens eine der zwei Mobilstationen (503, 505) eine Alt-Mobilstation ist und worin die Alt-Mobilstation einen der Subkanäle einnimmt.

2. Verfahren nach Anspruch 1, **dadurch gekennzeichnet, dass** die gesamte Energie des QPSK-modulierten Signals zwischen den zwei Subkanälen adaptiv verteilt wird.

3. Verfahren nach Anspruch 2, **dadurch gekennzeichnet, dass** die Energieverteilung zwischen den zwei Subkanälen des QPSK-modulierten Signals von einem Übertragungsschlitz zum nächsten Übertragungsschlitz geändert wird.

4. Verfahren nach einem der Ansprüche 1-3, **dadurch gekennzeichnet, dass** die zwei Mobilstationen Globales System für mobile Kommunikation-, GSM-Mobilstationen sind, die denselben Kanal unter Verwendung orthogonaler Subkanäle gemeinsam nutzen.

5. Verfahren nach einem der Ansprüche 1-4, **dadurch gekennzeichnet, dass** die QPSK-modulierten Signale alle auf dem Einheitskreis in der komplexen Ebene angeordnet sind.

6. Verfahren nach einem der Ansprüche 1-5, **dadurch gekennzeichnet, dass** die $\alpha$-QPSK-Konstellation die folgende Form hat:

$$\alpha\sqrt{\frac{1}{2}} + j\sqrt{2-\alpha^2}\sqrt{\frac{1}{2}} \quad \bigg| \quad \alpha\sqrt{\frac{1}{2}} - j\sqrt{2-\alpha^2}\sqrt{\frac{1}{2}} \quad \bigg| \quad -\alpha\sqrt{\frac{1}{2}} + j\sqrt{2-\alpha^2}\sqrt{\frac{1}{2}} \quad \bigg| \quad -\alpha\sqrt{\frac{1}{2}} - j\sqrt{2-\alpha^2}\sqrt{\frac{1}{2}}$$

7. Modulator zum Modulieren von Daten, die als ein moduliertes Signal in einem globales System für mobile Kommunikation, GSM-System, an zwei Mobilstationen übertragen werden, gemultiplext auf einem gemeinsam genutzten Kanal in zwei Subkanälen unter Verwendung eines Quadraturphasenumtastung-Modulationsschemas, QPSK-Modulationsschemas, worin einer der zwei Subkanäle ein I-Subkanal ist und der andere ein Q-Subkanal ist, **gekennzeichnet durch**:

   - Mittel (405) zum ungleichen Verteilen der gesamten Energie des QPSK-modulierten Signals zwischen den zwei Subkanälen des modulierten Signals, wobei eine $\alpha$-QPSK-Konstellationssequenz geformt wird, und
   - Mittel (407) zum Rotieren der Sequenz um $\pi/2$, und

   worin $\alpha$ darauf basierend eingestellt wird, dass eine Mobilstation (505) eine Alt-Mobilstation ist und worin die Alt-Mobilstation einen der Subkanäle einnimmt.

8. Modulator nach Anspruch 7, **gekennzeichnet durch** Mittel zum adaptiven Verteilen der gesamten Energie des QPSK-modulierten Signals zwischen den zwei Subkanälen.

9. Modulator nach Anspruch 8, **gekennzeichnet durch** Mittel zum Ändern der Energieverteilung zwischen den zwei Subkanälen von einem Übertragungsschlitz zum nächsten Übertragungsschlitz.

10. Modulator nach einem der Ansprüche 7-9, **gekennzeichnet durch** Mittel zum Lokalisieren aller QPSK-modulierter Signale auf dem Einheitskreis in der komplexen Ebene.

11. Modulator nach einem der Ansprüche 7-10, **dadurch gekennzeichnet, dass** die $\alpha$-QPSK-Konstellation die folgende Form hat:

$$\boxed{\alpha\sqrt{\frac{1}{2}} + j\sqrt{2-\alpha^2}\sqrt{\frac{1}{2}}} \quad \boxed{\alpha\sqrt{\frac{1}{2}} - j\sqrt{2-\alpha^2}\sqrt{\frac{1}{2}}} \quad \boxed{-\alpha\sqrt{\frac{1}{2}} + j\sqrt{2-\alpha^2}\sqrt{\frac{1}{2}}} \quad \boxed{-\alpha\sqrt{\frac{1}{2}} - j\sqrt{2-\alpha^2}\sqrt{\frac{1}{2}}}$$

**Revendications**

1. Procédé de modulation de données transmises dans un système GSM, système mondial de communication avec les mobiles, utilisant un schéma de modulation QPSK, modulation par déplacement de phase en quadrature, dans un système de radiocommunication cellulaire (500) comprenant une station émettrice-réceptrice de base, BTS, (501) transmettant des données à deux stations mobiles (503, 505) multiplexées sur un canal partagé comprenant deux sous-canaux, où un des deux sous-canaux est un sous-canal I et l'autre est un sous-canal Q, **caractérisé en ce que** l'énergie totale du signal modulé QPSK est divisée de manière inégale entre les deux sous-canaux du signal modulé formant une séquence de constellation α-QPSK, et faisant tourner la séquence de π/2, où α est défini sur la base qu'au moins une des deux stations mobiles (503, 505) est une station mobile héritée et où la station mobile héritée occupe un des sous-canaux.

2. Procédé selon la revendication 1, **caractérisé en ce que** l'énergie totale du signal modulé QPSK est divisée de manière adaptative entre les deux sous-canaux.

3. Procédé selon la revendication 2, **caractérisé en ce que** la distribution d'énergie entre les deux sous-canaux du signal modulé QPSK est modifiée d'un créneau de transmission au créneau de transmission suivant.

4. Procédé selon l'une quelconque des revendications 1 à 3, **caractérisé en ce que** les deux stations mobiles sont des stations mobiles GSM, système mondial de communication avec les mobiles, partageant le même canal en utilisant des sous-canaux orthogonaux.

5. Procédé selon l'une quelconque des revendications 1 à 4, **caractérisé en ce que** les signaux modulés QPSK sont tous situés sur le cercle unité dans le plan complexe.

6. Procédé selon l'une quelconque des revendications 1 à 5, **caractérisé en ce que** la constellation α-QPSK a la forme suivante :

$$\boxed{\alpha\sqrt{\frac{1}{2}} + j\sqrt{2-\alpha^2}\sqrt{\frac{1}{2}}} \quad \boxed{\alpha\sqrt{\frac{1}{2}} - j\sqrt{2-\alpha^2}\sqrt{\frac{1}{2}}} \quad \boxed{-\alpha\sqrt{\frac{1}{2}} + j\sqrt{2-\alpha^2}\sqrt{\frac{1}{2}}} \quad \boxed{-\alpha\sqrt{\frac{1}{2}} - j\sqrt{2-\alpha^2}\sqrt{\frac{1}{2}}}$$

7. Modulateur destiné à moduler des données transmises sous la forme d'un signal modulé dans un système GSM, système mondial de communication avec les mobiles, à deux stations mobiles multiplexées sur un canal partagé en deux sous-canaux au moyen d'un schéma de modulation QPSK, modulation par déplacement de phase en quadrature, où un des deux sous-canaux est un sous-canal I et l'autre est un sous-canal Q, **caractérisé par** :

   - des moyens (405) pour diviser l'énergie totale du signal modulé QPSK de manière inégale entre les deux sous-canaux du signal modulé formant une séquence de constellation α-QPSK, et
   - des moyens (407) pour faire tourner la séquence de π/2, et

   où α est défini sur la base qu'une station mobile (505) est une station mobile héritée et où la station mobile héritée occupe un des sous-canaux.

8. Modulateur selon la revendication 7, **caractérisé par** des moyens destinés à diviser de manière adaptative l'énergie totale du signal QPSK modulé entre les deux sous-canaux.

9. Modulateur selon la revendication 8, **caractérisé par** des moyens destinés à modifier la distribution d'énergie entre les deux sous-canaux d'un créneau de transmission au créneau de transmission suivant.

10. Modulateur selon l'une quelconque des revendications 7 à 9, **caractérisé par** des moyens destinés à situer tous les signaux modulés QPSK sur le cercle unité dans le plan complexe.

**11.** Modulateur selon l'une quelconque des revendications 7 à 10, **caractérisé en ce que** la constellation $\alpha$-QPSK a la forme suivante :

| $\alpha\sqrt{\frac{1}{2}} + j\sqrt{2-\alpha^2}\sqrt{\frac{1}{2}}$ | $\alpha\sqrt{\frac{1}{2}} - j\sqrt{2-\alpha^2}\sqrt{\frac{1}{2}}$ | $-\alpha\sqrt{\frac{1}{2}} + j\sqrt{2-\alpha^2}\sqrt{\frac{1}{2}}$ | $-\alpha\sqrt{\frac{1}{2}} - j\sqrt{2-\alpha^2}\sqrt{\frac{1}{2}}$ |
|---|---|---|---|

101 Multiplex data on OSC

103 Select α

105 Create adapted quadrature constellation

107 Transmit multiplexed signal using adapted quadrature constellation

Fig. 1

Fig. 2

Fig. 3

401

code bits
user 1
→ MODU LATE {+1,-1} → ($a_n$) → Map to α-QPSK symbols → ($c_n$) → rotate $\frac{\pi}{2}$ → pulse shaping → Amplify and up-mix

code bits
user 2
→ MODU LATE {+1,-1} → ($b_n$) →

403

$c_n = \alpha a_n + j b_n \cdot \sqrt{2-\alpha^2}$

400

405

407

409

411

Fig. 4

Fig. 5

•Traning sequences for users 1 and 2
•Sampled received signal

Estimate (possibly jointly)

• Synchronization position
• Channel impulse response
• Cross power branch ratio parameter α (or χ)

Use the α-QPSK constellation in the demodulator

Unknown α

601

603

605

600

Fig. 6a

•Traning sequences for users 1 and 2
•Sampled received signal
•Cross power branch ratio parameter α(or χ)

Use α (or χ) during the estimation of

• Synchronization position
• Channel impulse response

Use the α-QPSK constellation in the demodulator

Known α

651

653

655

650

Fig. 6b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1037437 A2

**Non-patent literature cited in the description**

• New Study Item on Multi-User Reusing One Slot (MUROS. *3GPP TSG GERAN Meeting #36, GP072027*
• The Performance of OSC and Feasibility Analysis. *3GPP TSG GERAN Meeting #36, GP071663*
• Discussion Paper on OSC. *3GPP TSG GERAN Meeting #36, GP071785*
• On Orthogonal Sub channels. *3GPP TSG GERAN Meeting #36, GP071720*

• Voice capacity evolution with orthogonal sub channel. *3GPP TSG GERAN Meeting #33, GP-070214*
• Speech capacity enhancements using DARP. *3GPP TSG GERAN Meeting #36, GP071739*
• Voice Capacity Evolution with Orthogonal Sub. 3GPP DRAFT;GP-070214 - OSC, 3RD GENERATION PARTNERSHIP PROJECT (3GPP). MOBILE COMPETENCE CENTRE, 06 February 2007